# EUROPEAN PATENT SPECIFICATION

(11) **EP 3 652 879 B1**
(45) Date of publication and mention of the grant of the patent: **24.08.2022**
(21) Application number: 18743271.1
(22) Date of filing: 28.06.2018
(51) Int. Cl.: H04L 5/00, H04L 27/26, H04W 72/04, H04B 7/06

(54) **DEMODULATION REFERENCE SIGNAL (DMRS) SEQUENCE GENERATION AND RESOURCE MAPPING FOR PHYSICAL BROADCAST CHANNEL (PBCH) TRANSMISSIONS**
DEMODULATIONSREFERENZSIGNAL-(DMRS)-SEQUENZERZEUGUNG UND RESSOURCENKARTIERUNG FÜR PHYSIKALISCHE RUNDFUNKKANAL (PBCH)-ÜBERTRAGUNGEN
GÉNÉRATION DE SÉQUENCE DE SIGNAL DE RÉFÉRENCE DE DÉMODULATION (DMRS) ET MISE EN CORRESPONDANCE DE RESSOURCES POUR DES TRANSMISSIONS DE CANAL DE DIFFUSION PHYSIQUE (PBCH)

(30) Priority: 10.07.2017 US 201762530824 P; 27.06.2018 US 201816020248
(43) Date of publication of application: 20.05.2020
(73) Proprietor: QUALCOMM Incorporated, San Diego, CA 92121-1714 (US)
(72) Inventor: NAM, Wooseok, San Diego California 92121-1714 (US); LUO, Tao, San Diego California 92121-1714 (US); WANG, Xiao Feng, San Diego California 92121-1714 (US); AKKARAKARAN, Sony, San Diego California 92121-1714 (US); JOHN WILSON, Makesh Pravin, San Diego California 92121-1714 (US); NAGARAJA, Sumeeth, San Diego California 92130 (US); CHAKRABORTY, Kaushik, San Diego Texas 92121-1714 (US); CHEN, Shengbo, San Diego California 92121-1714 (US)
(74) Representative: Bardehle Pagenberg Partnerschaft mbB Patentanwälte Rechtsanwälte
(86) International application number: PCT/US2018/039977
(87) International publication number: WO 2019/013986

(56) References cited:
- US-A1- 2014 086 173
- SONY: "Discussion on SS block time index indication", 3GPP DRAFT; R1-1711659_TIME_INDEX_INDICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, P.R. China; 20170627 - 20170630 27 June 2017 (2017-06-27), XP051305915, Retrieved from the Internet: URL:http://www.3gpp.org/ftp/tsg_ran/WG1_RL 1/TSGR1_AH/NR_AH_1706/Docs/ [retrieved on 2017-06-27]
- ERICSSON: "Summary of email discussion [89-15] Details for NR-PBCH evaluation", 3GPP DRAFT; R1-1709868 89-15 SUMMARY OF NR-PBCH EVALUATION PHASE 2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG1, no. Hangzhou, China; 20170515 - 20170519 22 June 2017 (2017-06-22), XP051304179, Retrieved from the Internet: URL:http://www.3gpp.org/ftp/tsg_ran/WG1_RL 1/TSGR1_89/Docs/ [retrieved on 2017-06-22]
- QUALCOMM INCORPORATED: "DMRS design for NR-PBCH", 3GPP DRAFT; R1-1711141 DMRS DESIGN FOR NR-PBCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, P.R. China; 20170627 - 20170630 26 June 2017 (2017-06-26), XP051300341, Retrieved from the Internet: URL:http://www.3gpp.org/ftp/Meetings_3GPP_ SYNC/RAN1/Docs/ [retrieved on 2017-06-26]
- NTT DOCOMO ET AL: "Discussion on sequence design of DMRS for NR-PBCH", 3GPP DRAFT; R1-1711062_DISCUSSION ON SEQUENCE DESIGN OF DMRS FOR NR-PBCH_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Qingdao, P.R. China; 20170627 - 20170630 26 June 2017 (2017-06-26), XP051300262, Retrieved from the Internet: URL:http://www.3gpp.org/ftp/Meetings_3GPP_ SYNC/RAN1/Docs/ [retrieved on 2017-06-26]
- SAMSUNG: "Remaining issues of NR-PBCH", 3GPP DRAFT; R1-1709180_PBCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 14 May 2017 (2017-05-14), XP051274320, Retrieved from the Internet: URL:http://www.3gpp.org/ftp/Meetings_3GPP_ SYNC/RAN1/Docs/ [retrieved on 2017-05-14]
- ERICSSON: "NR-PBCH DMRS design", 3GPP DRAFT; R1-1711376_NR_PBCH_DMRS_DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, P.R. China; 20170627 - 20170630 26 June 2017 (2017-06-26), XP051300565, Retrieved from the Internet: URL:http://www.3gpp.org/ftp/Meetings_3GPP_ SYNC/RAN1/Docs/ [retrieved on 2017-06-26]

## Description

### CROSS-REFERENCE TO RELATED APPLICATIONS

This application claims benefit of priority to U.S. Provisional Application Serial Number 62/530,824, filed on July 10, 2017, and U.S. Patent Application No. 16/020,248, filed June 27, 2018.

### INTRODUCTION

Aspects of the present disclosure relate to wireless communications, and more particularly, to DMRS sequence generation and resource mapping for PBCH transmissions.

Wireless communication systems are widely deployed to provide various telecommunication services such as telephony, video, data, messaging, broadcasts, etc. These wireless communication systems may employ multiple-access technologies capable of supporting communication with multiple users by sharing available system resources (e.g., bandwidth, transmit power, etc.). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

In some examples, a wireless multiple-access communication system may include a number of base stations (BSs), which are each capable of simultaneously supporting communication for multiple communication devices, otherwise known as user equipments (UEs). In an LTE or LTE-A network, a set of one or more base stations may define an eNodeB (eNB). In other examples (e.g., in a next generation, a new radio (NR), or 5G network), a wireless multiple access communication system may include a number of distributed units (DUs) (e.g., edge units (EUs), edge nodes (ENs), radio heads (RHs), smart radio heads (SRHs), transmission reception points (TRPs), etc.) in communication with a number of central units (CUs) (e.g., central nodes (CNs), access node controllers (ANCs), etc.), where a set of one or more distributed units, in communication with a central unit, may define an access node (e.g., which may be referred to as a base station, 5G NB, next generation NodeB (gNB or gNodeB), TRP, etc.). A base station or distributed unit may communicate with a set of UEs on downlink channels (e.g., for transmissions from a base station or to a UE) and uplink channels (e.g., for transmissions from a UE to a base station or distributed unit).

These multiple access technologies have been adopted in various telecommunication standards to provide a common protocol that enables different wireless devices to communicate on a municipal, national, regional, and even global level. New Radio (NR) (e.g., 5G) is an example of an emerging telecommunication standard. NR is a set of enhancements to the LTE mobile standard promulgated by 3GPP. It is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation.

However, as the demand for mobile broadband access continues to increase, there exists a need for further improvements in NR and LTE technology. Preferably, these improvements should be applicable to other multi-access technologies and the telecommunication standards that employ these technologies.

3GPP draft R1-1711659 proposes avoiding decoding of NR-PBCH as much as possible when performing neighbor cell measurement and cell handover, as well as introducing implicit time index indication mechanism based on NR-PBCH-DMRS.

3GPP Draft R1-1709868 summarizes email discussion [89-15] details for NR-PBCH evaluation.

US 2014/086173 A1 discloses a method of receiving, by the WTRU, the ePBCH, and demodulating the ePBCH based on a demodulation reference signal (DMRS).

3GPP draft R1-1711141 discusses NR-PBCH design.

3GPP draft R1-1711062 provides views on PBCH-DMRS sequence design for NR.

3GPP draft R1-1709180 investigates the remaining design issues related to NR system information delivery.

3GPP draft R1-1711376 discusses the NR-PBCH DMRS design issues, including the DMRS RE mapping pattern, average frequency domain RE density and sequence generation scheme.

### BRIEF SUMMARY

The invention is defined in independent claims. Dependent claims concern particular embodiments of the invention.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 is a block diagram conceptually illustrating an example telecommunications system, in accordance with certain aspects of the present disclosure.
FIG. 2 is a block diagram illustrating an example logical architecture of a distributed radio access network (RAN), in accordance with certain aspects of the present disclosure.
FIG. 3 is a diagram illustrating an example physical architecture of a distributed RAN, in accordance with certain aspects of the present disclosure.
FIG. 4 is a block diagram conceptually illustrating a design of an example base station (BS) and user equipment (UE), in accordance with certain aspects of the present disclosure.
FIG. 5 is a diagram showing examples for implementing a communication protocol stack, in accordance with certain aspects of the present disclosure.
FIG. 6 illustrates an example of a frame format for a new radio (NR) system, in accordance with certain aspects of the present disclosure.
FIG. 7 example transmission timeline of synchronization signals for a new radio telecommunications system, in accordance with aspects of the present disclosure.
FIG. 8 illustrates an example resource mapping for an exemplary SS block, in accordance with aspects of the present disclosure.
FIG. 9 illustrates example operations that may be performed by a network entity (e.g., a base station), in accordance with certain aspects of the present disclosure.
FIG. 10 illustrates example operations that may be performed by user equipment (UE), in accordance with certain aspects of the present disclosure.
FIG. 11 illustrates an example mapping for DMRS tones, in accordance with certain aspects of the present disclosure.
FIG. 12 illustrates another example mapping for DMRS tones, in accordance with certain aspects of the present disclosure.
FIG. 13 illustrates an example mapping for DMRS sequences within a synchronization signal burst set, in accordance with certain aspects of the present disclosure.
FIG. 14 illustrates another example mapping for DMRS sequences within a synchronization signal burst set, in accordance with certain aspects of the present disclosure.
FIG. 15 illustrates a communication device, such as a BS, that may include various components configured to perform operations for the techniques disclosed herein in accordance with aspects of the present disclosure.
FIG. 16 illustrates a communication device, such as a UE, that may include various components configured to perform operations for the techniques disclosed herein in accordance with aspects of the present disclosure.
To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure provide apparatus, methods, processing systems, and computer readable medium for new radio (NR) (new radio access technology or 5G technology).

NR may support various wireless communication services, such as Enhanced mobile broadband (eMBB) targeting wide bandwidth (e.g. 80 MHz beyond), millimeter wave (mmW) targeting high carrier frequency (e.g. 60 GHz), massive MTC (mMTC) targeting non-backward compatible MTC techniques, and/or mission critical targeting ultra reliable low latency communications (URLLC). These services may include latency and reliability requirements. These services may also have different transmission time intervals (TTI) to meet respective quality of service (QoS) requirements. In addition, these services may co-exist in the same subframe.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

The techniques described herein may be used for various wireless communication technologies, such as LTE, CDMA, TDMA, FDMA, OFDMA, SC-FDMA and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS).

New Radio (NR) is an emerging wireless communications technology under development in conjunction with the 5G Technology Forum (5GTF). 3GPP Long Term Evolution (LTE) and LTE-Advanced (LTE-A) are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies. For clarity, while aspects may be described herein using terminology commonly associated with 3G and/or 4G wireless technologies, aspects of the present disclosure can be applied in other generation-based communication systems, such as 5G and later, including NR technologies.

New radio (NR) access (e.g., 5G technology) may support various wireless communication services, such as enhanced mobile broadband (eMBB) targeting wide bandwidth (e.g., 80 MHz or beyond), millimeter wave (mmW) targeting high carrier frequency (e.g., 25 GHz or beyond), massive machine type communications MTC (mMTC) targeting non-backward compatible MTC techniques, and/or mission critical targeting ultra-reliable low-latency communications (URLLC). These services may include latency and reliability requirements. These services may also have different transmission time intervals (TTI) to meet respective quality of service (QoS) requirements. In addition, these services may co-exist in the same subframe.

### Example Wireless Communications System

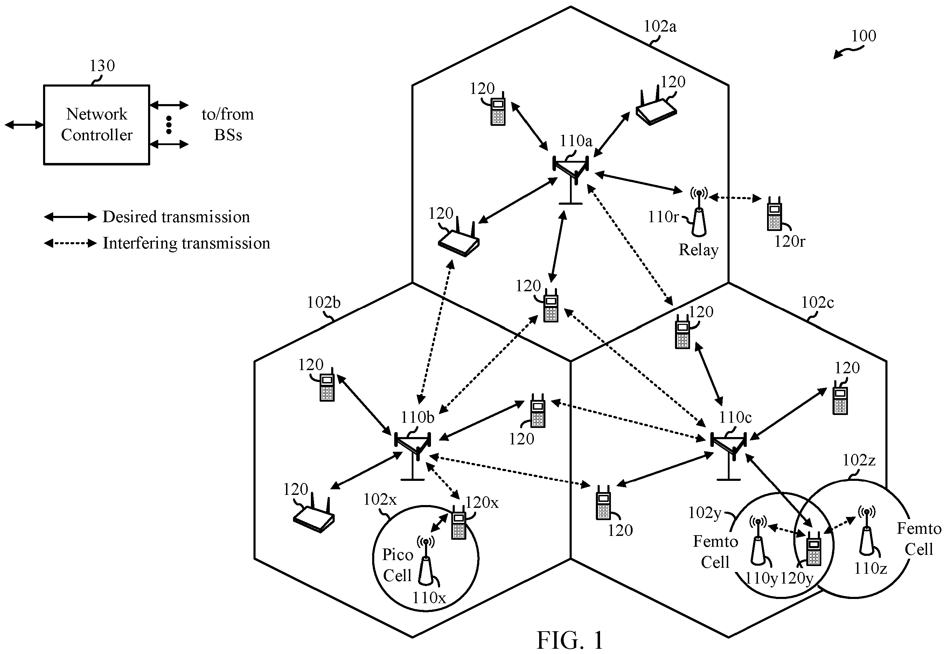

FIG. 1 illustrates an example wireless communication network 100 in which aspects of the present disclosure may be performed. For example, the wireless communication network 100 may be a New Radio (NR) or 5G network.

As will be described in more detail herein, a DMRS for a corresponding PBCH may be mapped to REs based, at least in part, on a Cell ID. Cell ID-based mapping for DMRS for PBCH may improve PBCH channel estimation by a UE by randomizing interference, such as interference from a PBCH transmitted by a neighboring cell. As described herein, a short or long sequence may be applied to the DMRS. In the case of a short sequence, each sequence may be separately generated for DMRS tones within each PBCH symbol. In the case of a long sequence, a sequence is generated and applied across all DMRS tones of PBCH symbols within a sync block.

As illustrated in FIG. 1, the wireless network 100 may include a number of BSs 110 and other network entities. A BS may be a station that communicates with UEs. Each BS 110 may provide communication coverage for a particular geographic area. In 3GPP, the term "cell" can refer to a coverage area of a Node B and/or a Node B subsystem serving this coverage area, depending on the context in which the term is used. In NR systems, the term "cell" and gNB, Node B, 5G NB, AP, NR BS, NR BS, or TRP may be interchangeable. In some examples, a cell may not necessarily be stationary, and the geographic area of the cell may move according to the location of a mobile base station. In some examples, the base stations may be interconnected to one another and/or to one or more other base stations or network nodes (not shown) in the wireless network 100 through various types of backhaul interfaces such as a direct physical connection, a virtual network, or the like using any suitable transport network.

As illustrated in FIG. 1, the wireless network 100 may include a number of base stations (BSs) 110 and other network entities. A BS may be a station that communicates with user equipments (UEs). Each BS 110 may provide communication coverage for a particular geographic area. In 3GPP, the term "cell" can refer to a coverage area of a Node B (NB) and/or a Node B subsystem serving this coverage area, depending on the context in which the term is used. In NR systems, the term "cell" and next generation NodeB (gNB), new radio base station (NR BS), 5G NB, access point (AP), or transmission reception point (TRP) may be interchangeable. In some examples, a cell may not necessarily be stationary, and the geographic area of the cell may move according to the location of a mobile BS. In some examples, the base stations may be interconnected to one another and/or to one or more other base stations or network nodes (not shown) in wireless communication network 100 through various types of backhaul interfaces, such as a direct physical connection, a wireless connection, a virtual network, or the like using any suitable transport network.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband, etc. Each frequency may support a single RAT in a given geographic area in order to avoid interference between wireless networks of different RATs. In some cases, NR or 5G RAT networks may be deployed.

A base station (BS) may provide communication coverage for a macro cell, a pico cell, a femto cell, and/or other types of cells. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having an association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS. In the example shown in FIG. 1, the BSs 110a, 110b and 110c maybe macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple (e.g., three) cells.

Wireless communication network 100 may also include relay stations. A relay station is a station that receives a transmission of data and/or other information from an upstream station (e.g., a BS or a UE) and sends a transmission of the data and/or other information to a downstream station (e.g., a UE or a BS). A relay station may also be a UE that relays transmissions for other UEs. In the example shown in FIG. 1, a relay station 110r may communicate with the BS 110a and a UE 120r in order to facilitate communication between the BS 110a and the UE 120r. A relay station may also be referred to as a relay BS, a relay, etc.

Wireless network 100 may be a heterogeneous network that includes BSs of different types, e.g., macro BS, pico BS, femto BS, relays, etc. These different types of BSs may have different transmit power levels, different coverage areas, and different impact on interference in the wireless network 100. For example, macro BS may have a high transmit power level (e.g., 20 Watts) whereas pico BS, femto BS, and relays may have a lower transmit power level (e.g., 1 Watt).

Wireless communication network 100 may support synchronous or asynchronous operation. For synchronous operation, the BSs may have similar frame timing, and transmissions from different BSs may be approximately aligned in time. For asynchronous operation, the BSs may have different frame timing, and transmissions from different BSs may not be aligned in time. The techniques described herein may be used for both synchronous and asynchronous operation.

A network controller 130 may couple to a set of BSs and provide coordination and control for these BSs. The network controller 130 may communicate with the BSs 110 via a backhaul. The BSs 110 may also communicate with one another (e.g., directly or indirectly) via wireless or wireline backhaul.

The UEs 120 (e.g., 120x, 120y, etc.) may be dispersed throughout the wireless network 100, and each UE may be stationary or mobile. A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet computer, a camera, a gaming device, a netbook, a smartbook, an ultrabook, an appliance, a medical device or medical equipment, a biometric sensor/device, a wearable device such as a smart watch, smart clothing, smart glasses, a smart wrist band, smart jewelry (e.g., a smart ring, a smart bracelet, etc.), an entertainment device (e.g., a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered machine-type communication (MTC) devices or evolved MTC (eMTC) devices. MTC and eMTC UEs include, for example, robots, drones, remote devices, sensors, meters, monitors, location tags, etc., that may communicate with a BS, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, which may be narrowband IoT (NB-IoT) devices.

Certain wireless networks (e.g., LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a "resource block" (RB)) may be 12 subcarriers (or 180 kHz). Consequently, the nominal Fast Fourier Transfer (FFT) size may be equal to 128, 256, 512, 1024 or 2048 for system bandwidth of 1.25, 2.5, 5, 10, or 20 megahertz (MHz), respectively. The system bandwidth may also be partitioned into subbands. For example, a subband may cover 1.08 MHz (i.e., 6 resource blocks), and there may be 1, 2, 4, 8, or 16 subbands for system bandwidth of 1.25, 2.5, 5, 10 or 20 MHz, respectively.

While aspects of the examples described herein may be associated with LTE technologies, aspects of the present disclosure may be applicable with other wireless communications systems, such as NR. NR may utilize OFDM with a CP on the uplink and downlink and include support for half-duplex operation using TDD. Beamforming may be supported and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells.

In some examples, access to the air interface may be scheduled, wherein a. A scheduling entity (e.g., a base station) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. In some examples, a UE may function as a scheduling entity and may schedule resources for one or more subordinate entities (e.g., one or more other UEs), and the other UEs may utilize the resources scheduled by the UE for wireless communication. In some examples, a UE may function as a scheduling entity in a peer-to-peer (P2P) network, and/or in a mesh network. In a mesh network example, UEs may communicate directly with one another in addition to communicating with a scheduling entity.

In FIG. 1, a solid line with double arrows indicates desired transmissions between a UE and a serving BS, which is a BS designated to serve the UE on the downlink and/or uplink. A finely dashed line with double arrows indicates interfering transmissions between a UE and a BS.

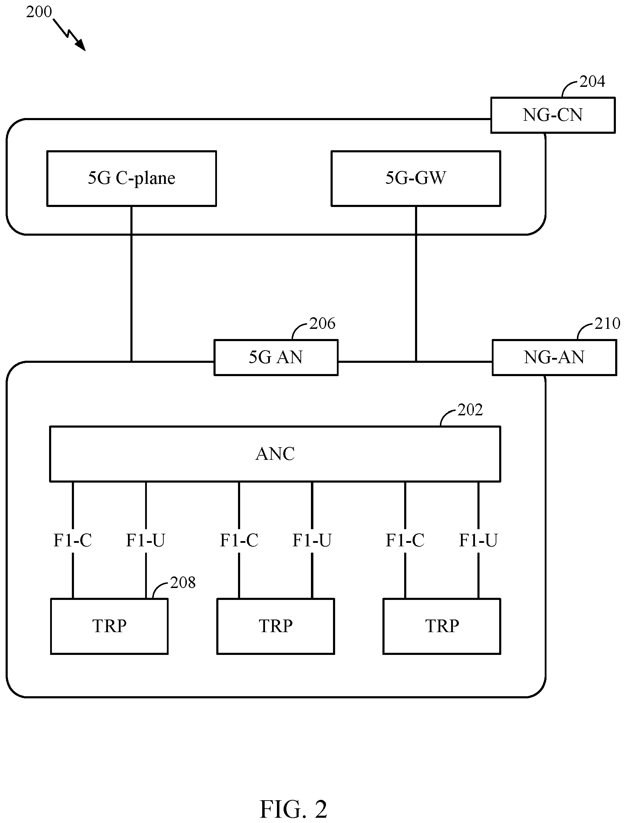

FIG. 2 illustrates an example logical architecture of a distributed Radio Access Network (RAN) 200, which may be implemented in the wireless communication network 100 illustrated in FIG. 1. A 5G access node 206 may include an access node controller (ANC) 202. ANC 202 may be a central unit (CU) of the distributed RAN 200. The backhaul interface to the Next Generation Core Network (NG-CN) 204 may terminate at ANC 202. The backhaul interface to neighboring next generation access Nodes (NG-ANs) 210 may terminate at ANC 202. ANC 202 may include one or more transmission reception points (TRPs) 208 (e.g., cells, BSs, gNBs, etc.).

The TRPs 208 may be a distributed unit (DU). TRPs 208 may be connected to a single ANC (e.g., ANC 202) or more than one ANC (not illustrated). For example, for RAN sharing, radio as a service (RaaS), and service specific AND deployments, TRPs 208 may be connected to more than one ANC. TRPs 208 may each include one or more antenna ports. TRPs 208 may be configured to individually (e.g., dynamic selection) or jointly (e.g., joint transmission) serve traffic to a UE.

The logical architecture of distributed RAN 200 may support fronthauling solutions across different deployment types. For example, the logical architecture may be based on transmit network capabilities (e.g., bandwidth, latency, and/or jitter).

The logical architecture of distributed RAN 200 may share features and/or components with LTE. For example, next generation access node (NG-AN) 210 may support dual connectivity with NR and may share a common fronthaul for LTE and NR.

The logical architecture of distributed RAN 200 may enable cooperation between and among TRPs 208, for example, within a TRP and/or across TRPs via ANC 202. An inter-TRP interface may not be used.

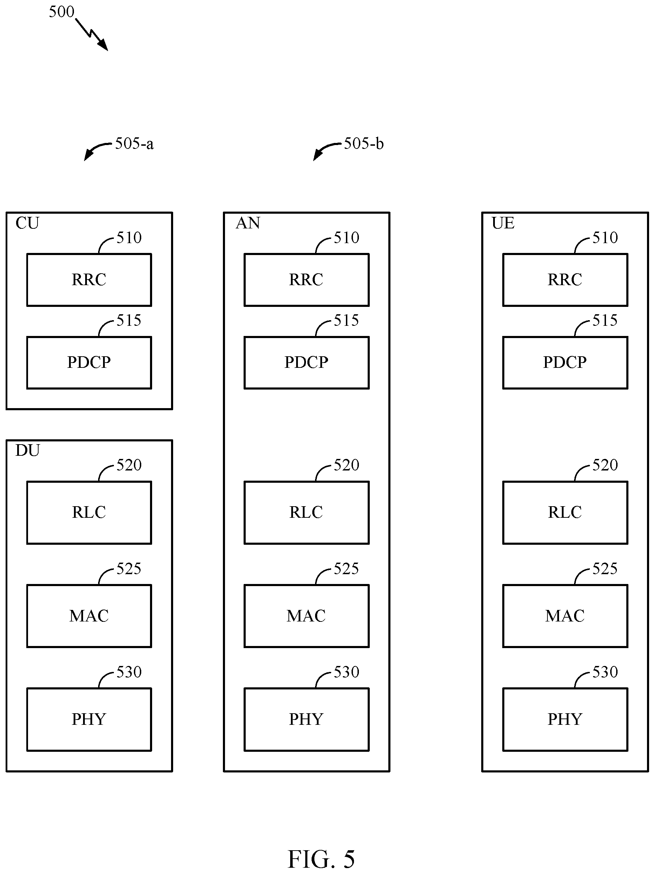

Logical functions may be dynamically distributed in the logical architecture of distributed RAN 200. As will be described in more detail with reference to FIG. 5, the Radio Resource Control (RRC) layer, Packet Data Convergence Protocol (PDCP) layer, Radio Link Control (RLC) layer, Medium Access Control (MAC) layer, and a Physical (PHY) layers maybe adaptably placed at the DU (e.g., TRP 208) or CU (e.g., ANC 202).

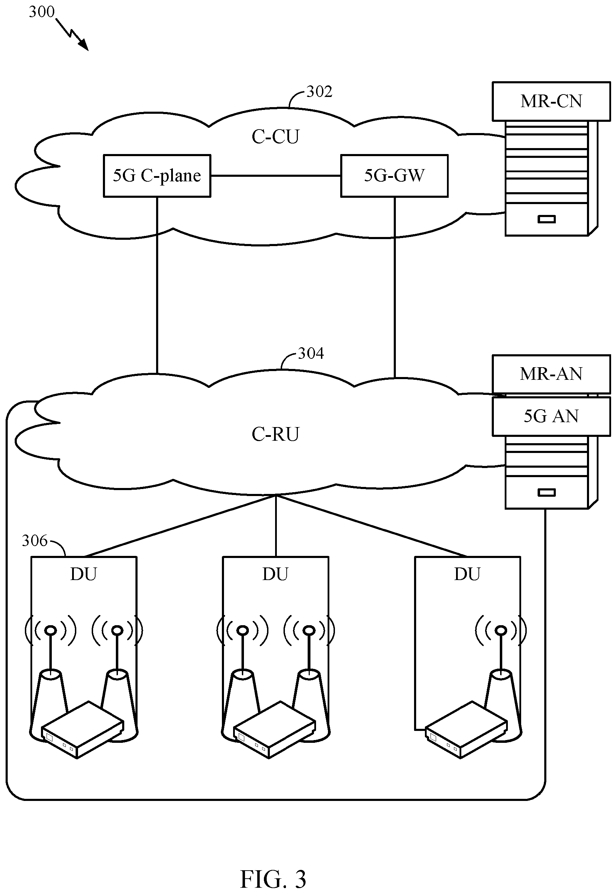

FIG. 3 illustrates an example physical architecture of a distributed Radio Access Network (RAN) 300, according to aspects of the present disclosure. A centralized core network unit (C-CU) 302 may host core network functions. C-CU 302 may be centrally deployed. C-CU 302 functionality may be offloaded (e.g., to advanced wireless services (AWS)), in an effort to handle peak capacity.

A centralized RAN unit (C-RU) 304 may host one or more ANC functions. Optionally, the C-RU 304 may host core network functions locally. The C-RU 304 may have distributed deployment. The C-RU 304 may be close to the network edge.

A DU 306 may host one or more TRPs (Edge Node (EN), an Edge Unit (EU), a Radio Head (RH), a Smart Radio Head (SRH), or the like). The DU may be located at edges of the network with radio frequency (RF) functionality.

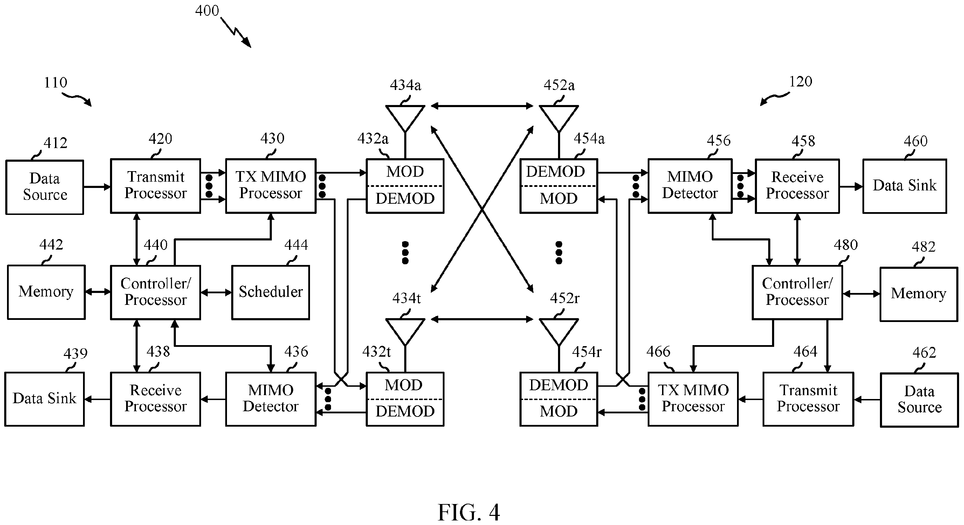

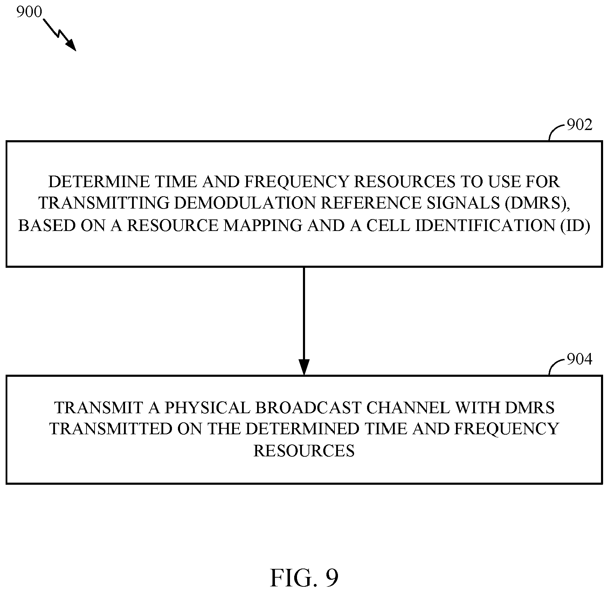

FIG. 4 illustrates example components of BS 110 and UE 120 (as depicted in FIG. 1), which may be used to implement aspects of the present disclosure. For example, antennas 452, processors 466, 458, 464, and/or controller/processor 480 of the UE 120 and/or antennas 434, processors 420, 430, 438, and/or controller/processor 440 of the BS 110 may be used to perform the various techniques and methods described herein and as illustrated in FIGs. 9-10.

At the BS 110, a transmit processor 420 may receive data from a data source 412 and control information from a controller/processor 440. The control information may be for the physical broadcast channel (PBCH), physical control format indicator channel (PCFICH), physical hybrid ARQ indicator channel (PHICH), physical downlink control channel (PDCCH), group common PDCCH (GC PDCCH), etc. The data may be for the physical downlink shared channel (PDSCH), etc. The processor 420 may process (e.g., encode and symbol map) the data and control information to obtain data symbols and control symbols, respectively. The processor 420 may also generate reference symbols, e.g., for the primary synchronization signal (PSS), secondary synchronization signal (SSS), and cell-specific reference signal (CRS). A transmit (TX) multiple-input multiple-output (MIMO) processor 430 may perform spatial processing (e.g., precoding) on the data symbols, the control symbols, and/or the reference symbols, if applicable, and may provide output symbol streams to the modulators (MODs) 432a through 432t. Each modulator 432 may process a respective output symbol stream (e.g., for OFDM, etc.) to obtain an output sample stream. Each modulator may further process (e.g., convert to analog, amplify, filter, and upconvert) the output sample stream to obtain a downlink signal. Downlink signals from modulators 432a through 432t may be transmitted via the antennas 434a through 434t, respectively.

At the UE 120, the antennas 452a through 452r may receive the downlink signals from the base station 110 and may provide received signals to the demodulators (DEMODs) in transceivers 454a through 454r, respectively. Each demodulator 454 may condition (e.g., filter, amplify, downconvert, and digitize) a respective received signal to obtain input samples. Each demodulator may further process the input samples (e.g., for OFDM, etc.) to obtain received symbols. A MIMO detector 456 may obtain received symbols from all the demodulators 454a through 454r, perform MIMO detection on the received symbols if applicable, and provide detected symbols. A receive processor 458 may process (e.g., demodulate, deinterleave, and decode) the detected symbols, provide decoded data for the UE 120 to a data sink 460, and provide decoded control information to a controller/processor 480.

On the uplink, at UE 120, a transmit processor 464 may receive and process data (e.g., for the physical uplink shared channel (PUSCH)) from a data source 462 and control information (e.g., for the physical uplink control channel (PUCCH) from the controller/processor 480. The transmit processor 464 may also generate reference symbols for a reference signal (e.g., for the sounding reference signal (SRS)). The symbols from the transmit processor 464 may be precoded by a TX MIMO processor 466 if applicable, further processed by the demodulators in transceivers 454a through 454r (e.g., for SC-FDM, etc.), and transmitted to the base station 110. At the BS 110, the uplink signals from the UE 120 may be received by the antennas 434, processed by the modulators 432, detected by a MIMO detector 436 if applicable, and further processed by a receive processor 438 to obtain decoded data and control information sent by the UE 120. The receive processor 438 may provide the decoded data to a data sink 439 and the decoded control information to the controller/processor 440.

The controllers/processors 440 and 480 may direct the operation at the base station 110 and the UE 120, respectively. The processor 440 and/or other processors and modules at the BS 110 may perform or direct the execution of processes for the techniques described herein. The memories 442 and 482 may store data and program codes for BS 110 and UE 120, respectively. A scheduler 444 may schedule UEs for data transmission on the downlink and/or uplink.

FIG. 5 illustrates a diagram 500 showing examples for implementing a communications protocol stack, according to aspects of the present disclosure. The illustrated communications protocol stacks may be implemented by devices operating in a wireless communication system, such as a 5G system (e.g., a system that supports uplink-based mobility). Diagram 500 illustrates a communications protocol stack including a Radio Resource Control (RRC) layer 510, a Packet Data Convergence Protocol (PDCP) layer 515, a Radio Link Control (RLC) layer 520, a Medium Access Control (MAC) layer 525, and a Physical (PHY) layer 530. In various examples, the layers of a protocol stack may be implemented as separate modules of software, portions of a processor or ASIC, portions of non-collocated devices connected by a communications link, or various combinations thereof. Collocated and non-collocated implementations may be used, for example, in a protocol stack for a network access device (e.g., ANs, CUs, and/or DUs) or a UE.

A first option 505-a shows a split implementation of a protocol stack, in which implementation of the protocol stack is split between a centralized network access device (e.g., an ANC 202 in FIG. 2) and distributed network access device (e.g., DU 208 in FIG. 2). In the first option 505-a, an RRC layer 510 and a PDCP layer 515 may be implemented by the central unit, and an RLC layer 520, a MAC layer 525, and a PHY layer 530 may be implemented by the DU. In various examples the CU and the DU may be collocated or non-collocated. The first option 505-a may be useful in a macro cell, micro cell, or pico cell deployment.

A second option 505-b shows a unified implementation of a protocol stack, in which the protocol stack is implemented in a single network access device. In the second option, RRC layer 510, PDCP layer 515, RLC layer 520, MAC layer 525, and PHY layer 530 may each be implemented by the AN. The second option 505-b may be useful in, for example, a femto cell deployment.

Regardless of whether a network access device implements part or all of a protocol stack, a UE may implement an entire protocol stack as shown in 505-c (e.g., the RRC layer 510, the PDCP layer 515, the RLC layer 520, the MAC layer 525, and the PHY layer 530).

In LTE, the basic transmission time interval (TTI) or packet duration is the 1 ms subframe. In NR, a subframe is still 1 ms, but the basic TTI is referred to as a slot. A subframe contains a variable number of slots (e.g., 1, 2, 4, 8, 16, ... slots) depending on the subcarrier spacing. The NR RB is 12 consecutive frequency subcarriers. NR may support a base subcarrier spacing of 15 KHz and other subcarrier spacing may be defined with respect to the base subcarrier spacing, for example, 30 kHz, 60 kHz, 120 kHz, 240 kHz, etc. The symbol and slot lengths scale with the subcarrier spacing. The CP length also depends on the subcarrier spacing.

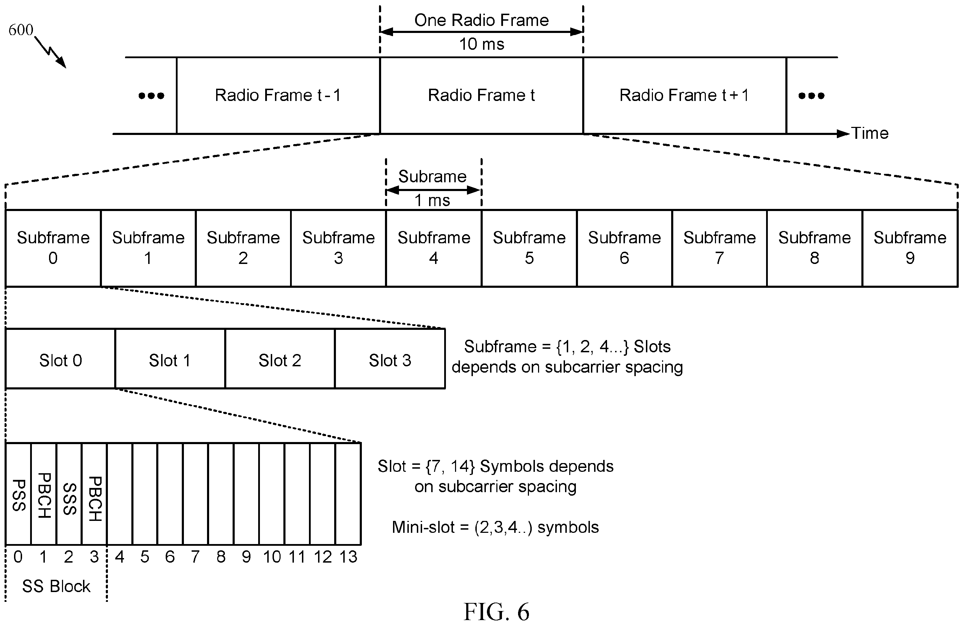

FIG. 6 is a diagram showing an example of a frame format 600 for NR. The transmission timeline for each of the downlink and uplink may be partitioned into units of radio frames. Each radio frame may have a predetermined duration (e.g., 10 ms) and may be partitioned into 10 subframes, each of 1 ms, with indices of o through 9. Each subframe may include a variable number of slots depending on the subcarrier spacing. Each slot may include a variable number of symbol periods (e.g., 7 or 14 symbols) depending on the subcarrier spacing. The symbol periods in each slot may be assigned indices. A mini-slot is a subslot structure (e.g., 2, 3, or 4 symbols).

Each symbol in a slot may indicate a link direction (e.g., DL, UL, or flexible) for data transmission and the link direction for each subframe may be dynamically switched. The link directions may be based on the slot format. Each slot may include DL/UL data as well as DL/UL control information.

In NR, a synchronization signal (SS) block is transmitted. The SS block includes a PSS, a SSS, and a two symbol PBCH. The SS block can be transmitted in a fixed slot location, such as the symbols 0-3 as shown in FIG. 6. The PSS and SSS may be used by UEs for cell search and acquisition. The PSS may provide half-frame timing, the SS may provide the CP length and frame timing. The PSS and SSS may provide the cell identity. The PBCH carries some basic system information, such as downlink system bandwidth, timing information within radio frame, SS burst set periodicity, system frame number, etc. The SS blocks may be organized into SS bursts to support beam sweeping. Further system information such as, remaining minimum system information (RMSI), system information blocks (SIBs), other system information (OSI) can be transmitted on a physical downlink shared channel (PDSCH) in certain subframes.

In some circumstances, two or more subordinate entities (e.g., UEs) may communicate with each other using sidelink signals. Real-world applications of such sidelink communications may include public safety, proximity services, UE-to-network relaying, vehicle-to-vehicle (V2V) communications, Internet of Everything (IoE) communications, IoT communications, mission-critical mesh, and/or various other suitable applications. Generally, a sidelink signal may refer to a signal communicated from one subordinate entity (e.g., UEi) to another subordinate entity (e.g., UE2) without relaying that communication through the scheduling entity (e.g., UE or BS), even though the scheduling entity may be utilized for scheduling and/or control purposes. In some examples, the sidelink signals may be communicated using a licensed spectrum (unlike wireless local area networks, which typically use an unlicensed spectrum).

A UE may operate in various radio resource configurations, including a configuration associated with transmitting pilots using a dedicated set of resources (e.g., a radio resource control (RRC) dedicated state, etc.) or a configuration associated with transmitting pilots using a common set of resources (e.g., an RRC common state, etc.). When operating in the RRC dedicated state, the UE may select a dedicated set of resources for transmitting a pilot signal to a network. When operating in the RRC common state, the UE may select a common set of resources for transmitting a pilot signal to the network. In either case, a pilot signal transmitted by the UE may be received by one or more network access devices, such as an AN, or a DU, or portions thereof. Each receiving network access device may be configured to receive and measure pilot signals transmitted on the common set of resources, and also receive and measure pilot signals transmitted on dedicated sets of resources allocated to the UEs for which the network access device is a member of a monitoring set of network access devices for the UE. One or more of the receiving network access devices, or a CU to which receiving network access device(s) transmit the measurements of the pilot signals, may use the measurements to identify serving cells for the UEs, or to initiate a change of serving cell for one or more of the UEs.

### EXAMPLE SYNCHRONIZATION SIGNAL BLOCK DESIGN

Under 3GPP's 5G wireless communication standards, a structure has been defined for NR synchronization (synch) signals (NR-SS), also referred to as NR synchronization channels. Under 5G, a set of consecutive OFDM symbols carrying different types of synch signals (e.g., primary synchronization signal (PSS), secondary synchronization signal (SSS), and PBCH) forms an SS block. In some cases, a set of one or more SS blocks may form an SS burst set. In addition, different SS blocks may be transmitted on different beams to achieve beam-sweeping for synch signals, which may be used by a UE to quickly identify and acquire a cell. Further, one or more of the channels in an SS block may be used for measurements. Such measurements may be used for various purposes such as radio link management (RLM), beam management, etc. For example, a UE may measure the cell quality by measuring one or more of channels in the SS block. The UE may report the quality to the network in the form of a measurement report, which may be used by the network for beam management and other purposes.

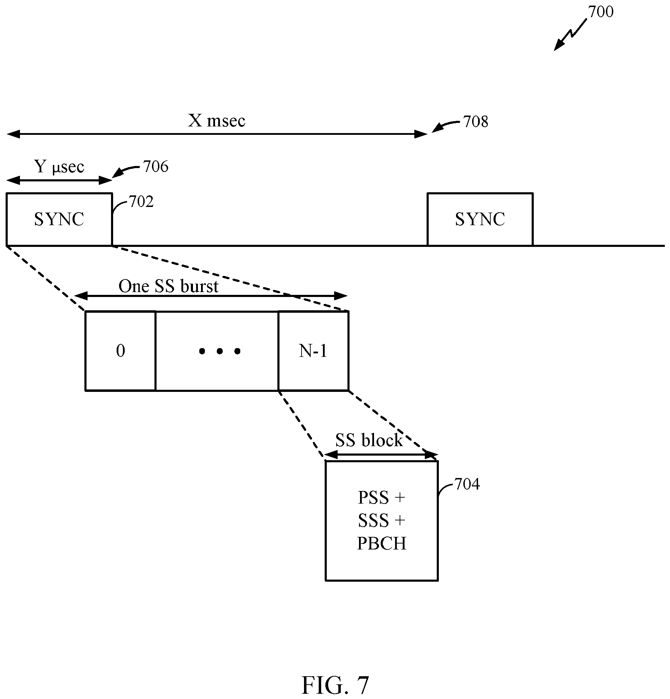

FIG. 7 illustrates an example transmission timeline 700 of synchronization signals for a NR telecommunications system, in accordance with aspects of the present disclosure. A BS, such as BS 110 shown in FIG. 1, may transmit an SS burst set 702 during a period 706 of Y µsec, in accordance with certain aspects of the present disclosure. At 702, the BS (e.g., gNB, network) transmits a synchronization signal (SS) burst set. The SS burst set 702 may include *N* SS blocks (sync blocks) 704 with indices of zero to N-1. The BS may transmit different SS blocks 704 of the burst set 702 using different transmit beams (e.g., for beam-sweeping). Each SS block 704 may include, for example, a primary synchronization signal (PSS), a secondary synchronization signal (SSS), and one or more physical broadcast channels (PBCHs), which may collectively or individually be referred to as synchronization channels. The BS may transmit SS bursts on a periodic basis, with a period 708 of X msec.

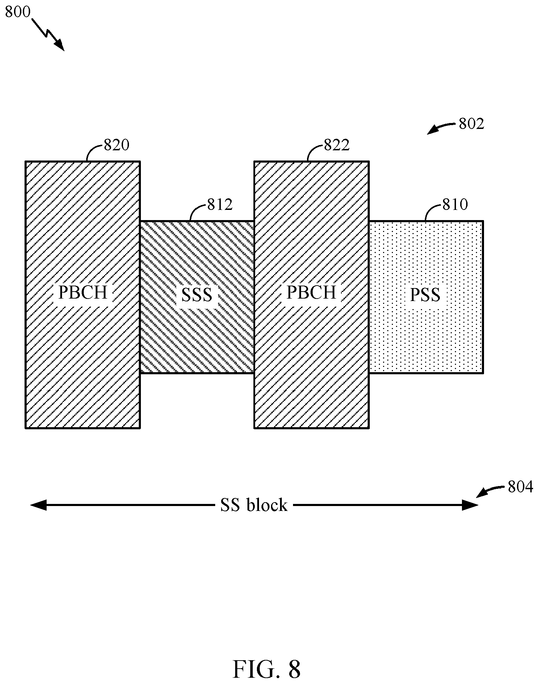

FIG. 8 illustrates an example resource mapping 800 for an exemplary SS block 802, in accordance with aspects of the present disclosure. The exemplary SS block may be transmitted by a BS, such as BS 110 in FIG. 1, over a period 804 (e.g., Y µsec, as shown in FIG. 7). The exemplary SS block includes a PSS 810, an SSS 812, and two PBCHs 820 and 822, although the disclosure is not so limited. An SS block may include more or fewer synchronization signals and synchronization channels. As illustrated (e.g., on the y-axis), a transmission bandwidth (Bi) of the PBCHs 820, 822 may be different from a transmission bandwidth (B2) of the synchronization signals 810, 812. For example, the transmission bandwidth of the PBCHs may be 288 tones, while the transmission bandwidth of the PSS and SSS may be 127 tones.

As shown in FIG. 8, the SS block consists of PSS, SSS and PBCH (and DMRS for PBCH). These signals are multiplexed in time-domain. There are different synchronization modes: initial acquisition in standalone, initial acquisition in non-standalone, and Synchronization in idle or connected modes. The different synchronization modes may have different PBCH TTI and PBCH transmission periodicities. As a result, different SFN bits may change within a TTI, presenting a challenge to maintain the same content in each redundancy version.

### EXAMPLE DMRS RESOURCE MAPPING FOR NR-PBCH

As noted above, and as shown in FIG. 8, in an SS burst set, PBCH may be transmitted in different SS blocks (having different SS block indices) and in different beam directions. To allow for demodulation and channel estimation, demodulation reference signals (DMRS) may be transmitted with PBCH (e.g., a Gold sequence type). In some cases, the maximum number of SS-blocks within SS burst set, L, may vary with the carrier frequency range (e.g., L=4 for a frequency range up to 3GHz, L=8, for a frequency range from 3 GHz to 6 GHz, and/or L = 64 for a frequency range above 6 GHz).

In NR, a DMRS sequence for PBCH may depend on the physical cell ID. For example, a DMRS sequence may be initialized from a cell ID and 2 or 3 bits of timing information. Different sequences may be used in all NR-PBCH symbols. In some cases, DMRS may have the same resource element (RE) position in all NR-PBCH symbols.

According to aspects of the present disclosure, in addition to (or as an alternative to) cell ID dependent DMRS sequence generation, DMRS tone/RE mapping for PBCH may also be cell ID dependent. Such cell ID dependent DMRS tone mapping may help improve PBCH channel estimation performance by randomizing interference from the PBCH DMRS tones of neighboring cells. As will be described in greater detail below, for multi-symbol PBCH, the DMRS sequence may be short (e.g., a same sequence for all DMRS tones in one PBCH symbol) or long (a single sequence that is generated and mapped to multiple (all) DMRS tones of one or more PBCH (e.g., all PBCH symbols) within a sync block).

FIG. 9 illustrates example operations 900 that may be performed by a base station to generate DMRS for PBCH, in accordance with certain aspects of the present disclosure.

Operations 900 begin, at 902, by determining time and frequency resources to use for transmitting demodulation reference signals (DMRS), based on a resource mapping and a cell identification (ID). At 904, the base station transmits a physical broadcast channel (PBCH) with DMRS transmitted on the determined time and frequency resources.

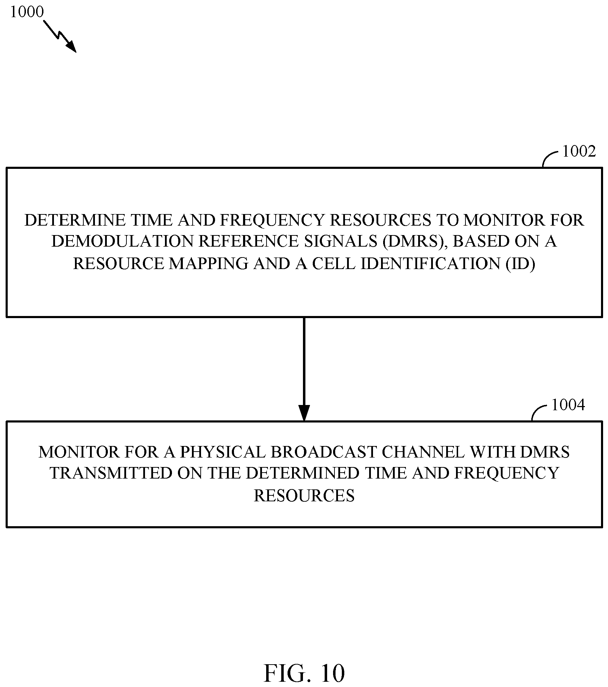

FIG. 10 illustrates example operations 1000 that maybe performed, for example, by a user equipment (UE) to monitor for PBCH with DMRS transmitted in accordance with operations 1000 described above.

Operations 1000 begin, at 1002, by determining time and frequency resources to monitor for demodulation reference signals (DMRS), based on a resource mapping and a cell identification (ID). At 1004, the UE monitors for a physical broadcast channel (PBCH) with DMRS transmitted on the determined time and frequency resources. The UE may decode the PBCH based on the monitored and detected DMRS for the PBCH.

Resource mapping refers to a resource mapping rule for DMRS signals to DMRS time/frequency resources in a PBCH. For example, the rule may be map a DMRS signal to "every 4^{th} tone starting from tone o of the DMRS symbol." According to aspects of the present disclosure, and as further described below, the mapping may further be based on a cell ID.

According to an aspect, the base set of tones used for DMRS within a PBCH symbol may be common for all cells. Based on the symbol index within a sync block, the base DMRS tone set may be shifted in the frequency domain. The shift amount may be dependent on the cell ID. If the amount of shift in the frequency domain is larger than the spacing between DMRS tones, or if a shifted DMRS tone falls outside of the PBCH band, a modulo/wrap-around shift may be used to shift the DMRS tones. In an example, a PBCH symbol 1 in a sync block may use a base DMRS tone set for DMRS sequence transmission. The PBCH symbol 2 in the sync block may use a shifted version of the base DMRS tone set, wherein the amount of shift is a function of the cell ID associated with the sync block.

According to one option, the base set of DMRS tones within a PBCH symbol can be a function of cell ID. For example, the DMRS sequence to RE (tone) mapping may involve a Cell ID dependent shift of tones used for DMRS in the PBCH. The Cell ID dependent shift may be applied to a base set of tones for DMRS.

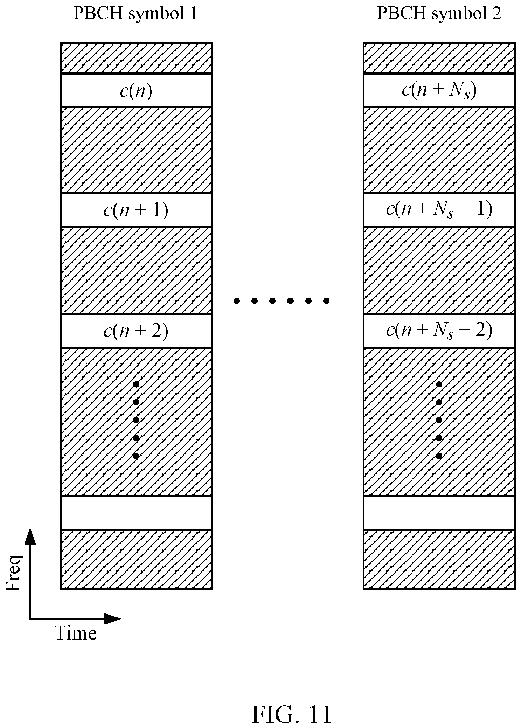

According to an aspect, the PBCH is repeated in multiple symbols within a sync block. Based on symbol index within a sync-block, the DMRS sequence may be (cyclic) shifted in the frequency domain by an amount dependent on the cell ID. When a gold sequence is used, separate shift values may be applied to each constituent sequences. As illustrated in FIG. 11, for 2 PBCH symbols (symbol 1 and symbol 2) within a sync block, PBCH symbol 1 may use a DMRS sequence *c*(*n*), while PBCH symbol 2 uses a shifted sequence *c*(*n* + *N_{S}*), where *N_{S}* can be a function of the cell ID. In this manner, the time and frequency resources, within a PBCH symbol, to be used for DMRS are determined based on a base set of tones and a shift dependent on the cell ID, such that a first set of tones is used for DMRS in a first symbol and a second set of tones is used for DMRS in a second symbol. The shift for the DMRS tones for the PBCH that is repeated in multiple symbols of the sync block may also be dependent on a symbol index within the sync block.

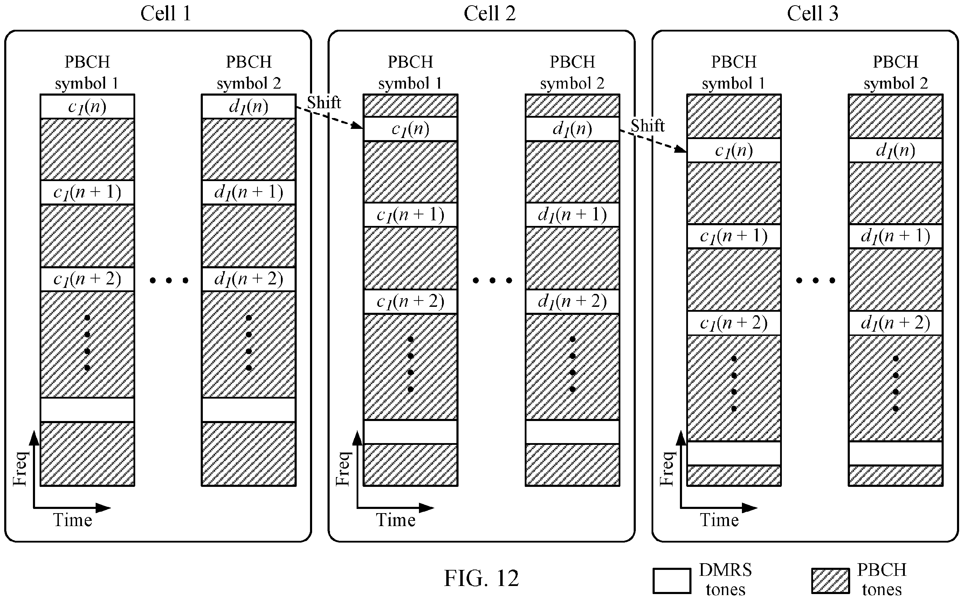

The base set of DMRS tones based on a Cell ID dependent shift, Cell ID dependent interval, Cell ID dependent pattern, or the like, may help improve PBCH channel estimation by further randomizing the interference from the DMRS of neighboring cells. Based on the DRMS symbol index within a sync block, additional frequency domain shift can be applied. The amount of the shift can also be a function of cell ID as previously described. FIG. 12 shows an example of such a mapping with 3 cells, with the base set of DMRS tones being a function of cell ID. As shown in FIG. 12, the DMRS tones in the PBCH symbols for Cell 1, Cell 2, and Cell 3 are based on the respective Cell ID. The DMRS tones in the PBCH symbols for Cell 2 are shifted (for example, cyclically shifted) as compared to the DMRS tones in the PBCH symbols for Cell 2. Similarly, the DMRS tones in the PBCH symbols for Cell 3 are shifted (for example, cyclically shifted) as comparted to the DMRS tones in the PBCH symbols for Cell 2.

Depending on the implementation, generation of cell ID dependent DMRS sequences in NR can be short or long. For example, a short DMRS sequence may be generated for all (every) DMRS tone within one PBCH symbol. The sequences for different PBCH symbols may need to be different, for example, based on a shift (e.g., cyclic shift) of a DMRS sequence based on PBCH symbol index. For each PBCH symbol, the DMRS sequence is generated separately. For example, assuming two PBCH symbols (symbol 1 and symbol 2), the mapping of a DMRS sequence to the DMRS tones (REs) may be as follows:
PBCH symbol 1: a gold sequence *c*(*n*) is mapped to DMRS tones; and
PBCH symbol 2: shifted sequence *c*(*n* + *N_{S}*) is mapped to DMRS tones The shift amount *N_{S}* may depend on the cell ID.

As another example, different (cyclic) shift values may be applied to the constituent sequences of the gold code, such as:
PBCH symbol 1: a gold sequence *c*(*n*) = *x*₁(*n*) ⊗ *x*₂(*n*) is mapped to DMRS tones; and
PBCH symbol 2: another gold sequence *d*(*n*) = *x*₁(*n* + *N*_{*S*1}) ⊗ *x*₂(*n* + *N*_{*S*2}) is mapped to DMRS tones.

In an example, the previous example may be considered a special case where *N*_{*S*1} = *N*_{*S*2}*.*

In some cases, a long DMRS sequence is generated across all DMRS tones of all PBCH symbols within a sync block. A long sequence is a single sequence mapped across all DMRS tones of different PBCH symbols. Therefore the long sequence spans multiple DMRS tones in multiple PBCH symbols. Longer sequences may allow for better cross-correlation characteristics, resulting in better performance in the presence of interference from DMRS of neighboring cells; however, longer sequences may require more processing as compared to shorter sequences. Continuing with a 2 symbol example, the mapping of a DRMS sequence to DMRS tones (REs) may be as follows:
For DMRS tones in PBCH symbol 1: a sequence *c*(*n*), *c*(*n* + 1), ... , *c*(*n* + *N_{DMRS}* - 1) are mapped; and
For DMRS tones in PBCH symbol 2: a sequence *c*(*n* + *N_{DMRS}*), *c*(*n* + *N_{DMRS}* + 1), ... , *c*(*n* + 2*N_{DMRS}* - 1) are mapped.

Aspects of the present disclosure also provide techniques for mapping DMRS sequences within a SS burst set. In some cases, along with the PBCH payload, the DMRS sequence itself may carry up to 3 bits of time-identification information. For example, 3 bits of such information may be mapped to 8 different DMRS sequence (per given cell ID). The time-identification information may include, for example, a SS-block index within an SS burst, a system frame number associated with the SS block or SS burst, a slot number associated with the SS block or the SS burst, a half frame duration of the SS block or SS burst, and/or a SS block index within the SS burst. At the receiver, the DMRS sequence detection/identification yields 3 bit information. As described above, in some cases, these 3 bits may indicate the SS-block index within a SS burst set. For example, as noted above, for a frequency range below 6 GHz, there may be up to 8 SS-blocks within a SS burst set. Therefore, 3 bit would be sufficient to identify SS-block index within a SS burst set.

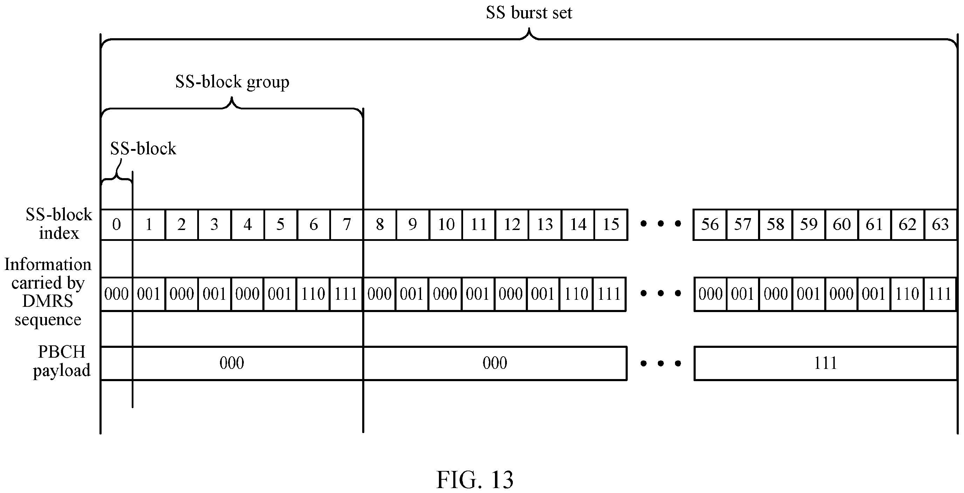

However, for a frequency range above 6 GHz, there may be up to 64 SS-blocks within a SS burst set. In such cases, there are different options for DMRS sequence mapping to SS-blocks. For example, as illustrated in FIG. 13, according to a "Group-based" DMRS sequence mapping, consecutive SS-blocks within a SS burst set may be divided into non-overlapping groups. In this case, a DMRS sequence may carry 2 bits (4 SS-blocks per group) or a DMRS sequence may carry 3 bits (8 SS-blocks per group). In some cases, DMRS sequences within a group may carry different information (e.g., the group index may be identified by PBCH payload).

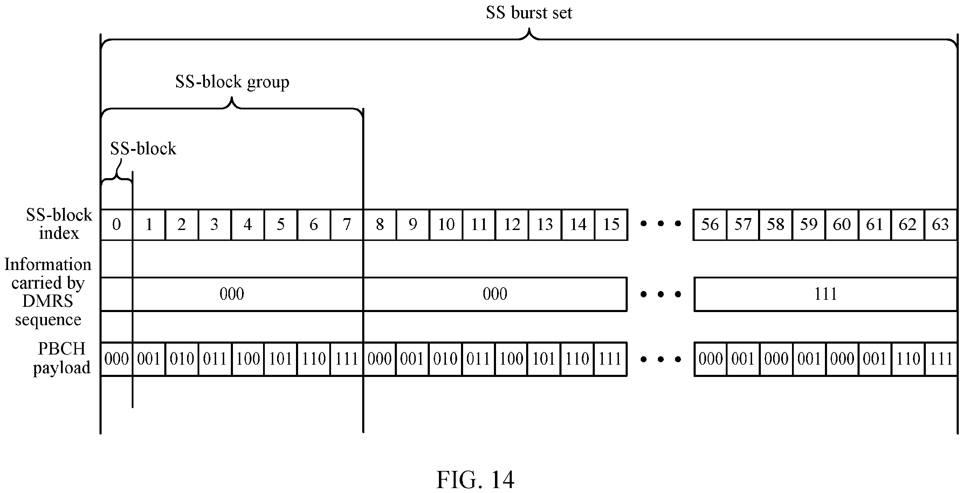

As illustrated in FIG. 14, according to another option, DMRS sequences within a group may carry the same information. In this case, for example, the SS-block index within a group may be identified by PBCH payload.

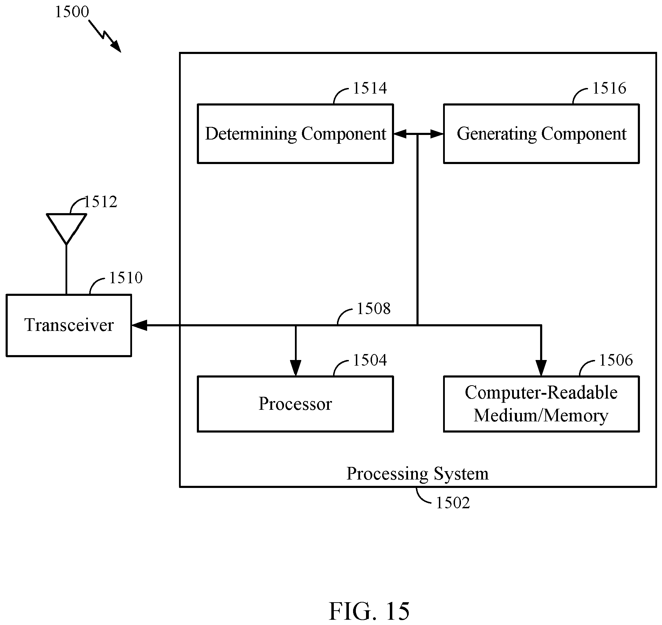

FIG. 15 illustrates a communications device 1500 that may include various components (e.g., corresponding to means-plus-function components) configured to perform operations for the techniques disclosed herein, such as the operations illustrated in FIG. 9. The communications device 1500 includes a processing system 1502 coupled to a transceiver 1510. The transceiver 1510 is configured to transmit and receive signals for the communications device 1500 via an antenna 1512, such as the various signal described herein. The processing system 1502 may be configured to perform processing functions for the communications device 1500, including processing signals received and/or to be transmitted by the communications device 1500.

The processing system 1502 includes a processor 1504 coupled to a computer-readable medium/memory 1506 via a bus 1508. In certain aspects, the computer-readable medium/memory 1506 is configured to store instructions that when executed by processor 1504, cause the processor 1504 to perform the operations illustrated in FIG. 9 and described herein.

In certain aspects, the processing system 1502 further includes a determining component 1514, and/or a generating component 1516. In certain aspects, the components 1514 and 1516 may be hardware circuits. In certain aspects, the components 1514 and 1516 may be software components that are executed and run on processor 1504.

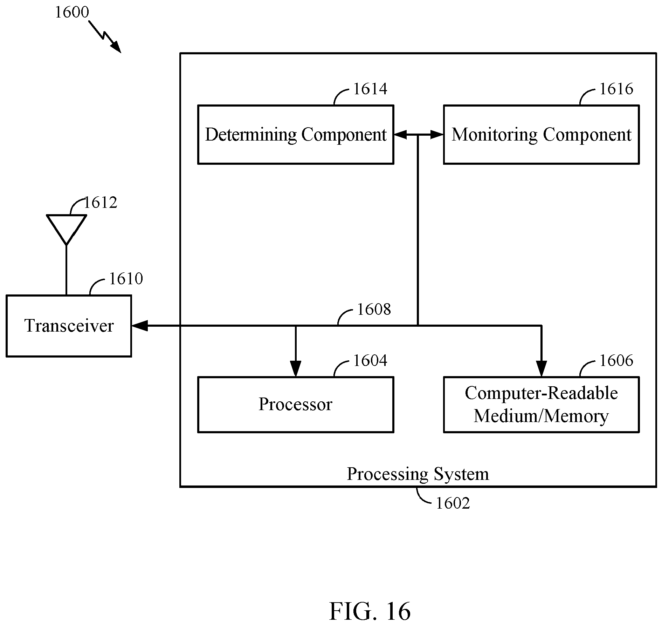

FIG. 16 illustrates a communications device 1600 that may include various components (e.g., corresponding to means-plus-function components) configured to perform operations for the techniques disclosed herein, such as the operations illustrated in FIG. 10. The communications device 1600 includes a processing system 1602 coupled to a transceiver 1610. The transceiver 1610 is configured to transmit and receive signals for the communications device 1600 via an antenna 1612, such as the various signal described herein. The processing system 1602 may be configured to perform processing functions for the communications device 1600, including processing signals received and/or to be transmitted by the communications device 1600.

The processing system 1602 includes a processor 1604 coupled to a computer-readable medium/memory 1606 via a bus 1608. In certain aspects, the computer-readable medium/memory 1606 is configured to store instructions that when executed by processor 1604, cause the processor 1604 to perform the operations illustrated in FIG. 10 and described herein.

In certain aspects, the processing system 1602 further includes a determining component 1614, and/or a monitoring component 1616. In certain aspects, the components 1614 and 1616 may be hardware circuits. In certain aspects, the components 1614 and 1616 may be software components that are executed and run on processor 1604.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions maybe stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

## Claims

1. A method for wireless communications by a network entity, comprising:
determining (902) time and frequency resources to use for transmitting demodulation reference signals, DMRS, based on a resource mapping and a cell identification, ID, wherein determining the time and frequency resources comprises:
determining a base set of tones;
determining a shift to apply to the base set of tones by applying a modulo function to the cell ID; and
applying the shift to the base set of tones to determine at least the frequency resources to use for transmitting the DMRS; and
transmitting (904) a physical broadcast channel, PBCH, with the DMRS transmitted on the determined time and frequency resources, wherein the transmitted DMRS includes two or three bits of timing information indicating a synchronization signal, SS, block index associated with the PBCH.

2. The method of claim 1, wherein the time and frequency resources are determined based on the base set of tones and the shift such that a first set of tones is used for the DMRS in a first PBCH symbol of the PBCH and a second set of tones is used for the DMRS in a second PBCH symbol of the PBCH.

3. The method of claim 2, wherein:
the first PBCH symbol is repeated in multiple symbols within a synchronization signal block, SSB; and
the shift for the DMRS in the first PBCH symbol is also dependent on a symbol index within the SSB.

4. The method of claim 3, wherein determining the shift by applying the modulo function comprises applying the modulo function to the cell ID to determine the shift in response to determining that an amount of shift is larger than a spacing between DMRS tones of the repeated PBCH symbol.

5. The method of claim 2, wherein the base set of tones is a function of the cell ID.

6. A method for wireless communications by a user equipment, comprising:
determining (1002) time and frequency resources to monitor for demodulation reference signals, DMRS, based on a resource mapping and a cell identification, ID, wherein determining the time and frequency resources comprises:
determining a base set of tones;
determining a shift to apply to the base set of tones by applying a modulo function to the cell ID; and
applying the shift to the base set of tones to determine at least the frequency resources to use for transmitting the DMRS; and
monitoring (1004) for a physical broadcast channel, PBCH, with the DMRS transmitted on the determined time and frequency resources, wherein the transmitted DMRS includes two or three bits of timing information indicating a synchronization signal, SS, block index associated with the PBCH.

7. The method of claim 6, wherein the time and frequency resources, are determined based on the base set of tones and the shift, such that a first set of tones is used for the DMRS in a first PBCH symbol of the PBCH and a second set of tones is used for the DMRS in a PBCH second symbol of the PBCH.

8. The method of claim 7, wherein:
the first PBCH symbol is repeated in multiple symbols within a synchronization signal block, SSB; and
the shift for the DMRS in the first PBCH symbol is also dependent on a symbol index within the SSB.

9. The method of claim 8, wherein determining the shift by applying the modulo function comprises applying the modulo function to the cell ID to determine the shift in response to determining that an amount of shift is larger than a spacing between DMRS tones of the repeated PBCH symbol.

10. The method of claim 7, wherein the base set of tones is a function of the cell ID.

11. An apparatus for wireless communications by a network entity, comprising at least one processor and a memory coupled to the at least one processor, wherein the at least one processor is configured to:
determine time and frequency resources to use for transmitting demodulation reference signals, DMRS, based on a resource mapping and a cell identification, ID, wherein the at least one processor is configured to determine the time and frequency resources by:
determining a base set of tones;
determining a shift to apply to the base set of tones by applying a modulo function to the cell ID; and
applying the shift to the base set of tones to determine at least the frequency resources to use for transmitting the DMRS; and
transmit a physical broadcast channel, PBCH, with the DMRS transmitted on the determined time and frequency resources, wherein the transmitted DMRS includes two or three bits of timing information indicating a synchronization signal, SS, block index associated with the PBCH.

12. The apparatus of claim 11, wherein the time and frequency resources, are determined based on the base set of tones and the shift, such that a first set of tones is used for the DMRS in a first PBCH symbol of the PBCH and a second set of tones is used for the DMRS in a second PBCH symbol of the PBCH.

13. An apparatus for wireless communications by a user equipment, comprising at least one processor and a memory coupled to the at least one processor, wherein the at least one processor is configured to:
determine time and frequency resources to monitor for demodulation reference signals, DMRS, based on a resource mapping and a cell identification, ID, wherein determining the time and frequency resources comprises:
determining a base set of tones;
determining a shift to apply to the base set of tones by applying a modulo function to the cell ID; and
applying the shift to the base set of tones to determine at least the frequency resources to use for transmitting the DMRS; and
monitor for a physical broadcast channel, PBCH, with the DMRS transmitted on the determined time and frequency resources, wherein the transmitted DMRS includes two or three bits of timing information indicating a synchronization signal, SS, block index associated with the PBCH.

14. The apparatus of claim 13, wherein the time and frequency resources are determined based on the base set of tones and the shift, such that a first set of tones is used for the DMRS in a first PBCH symbol of the PBCH and a second set of tones is used for DMRS in a PBCH second symbol of the PBCH.

15. A computer program comprising instructions, which when executed by a computer, cause the computer to carry out the method of any of the claims 1-10.

## Patentansprüche

1. Verfahren für drahtlose Kommunikationen durch eine Netzwerkeinheit, umfassend:
Bestimmen (902) von Zeit- und Frequenzressourcen zur Verwendung zum Übertragen von Demodulationsreferenzsignalen, DMRS, basierend auf einer Ressourcenzuordnung und einer Zellenidentifikation, ID, wobei Bestimmen der Zeit- und Frequenzressourcen umfasst:
Bestimmen eines Basissatzes von Tönen;
Bestimmen einer auf den Basissatz von Tönen anzuwendenden Verschiebung durch Anwenden einer Modulo-Funktion auf die Zellen-ID; und
Anwenden der Verschiebung auf den Basissatz von Tönen, um mindestens die Frequenzressourcen zur Verwendung zum Übertragen des DMRS zu bestimmen; und
Übertragen (904) eines physikalischen Rundfunkkanals, PBCH, mit dem DMRS übertragen auf den bestimmten Zeit- und Frequenzressourcen, wobei das übertragene DMRS zwei oder drei Bits von Zeitinformation enthält, die einen Synchronisationssignal-, SS, Blockindex anzeigt, der dem PBCH zugeordnet ist.

2. Verfahren gemäß Anspruch 1, wobei die Zeit- und Frequenzressourcen basierend auf dem Basissatz von Tönen und der Verschiebung bestimmt werden, so dass ein erster Satz von Tönen für das DMRS in einem ersten PBCH-Symbol des PBCH verwendet wird und ein zweiter Satz von Tönen für das DMRS in einem zweiten PBCH-Symbol des PBCH verwendet wird.

3. Verfahren gemäß Anspruch 2, wobei:
das erste PBCH-Symbol in mehreren Symbolen innerhalb eines Synchronisationssignalblocks, SSB, wiederholt wird; und
die Verschiebung für das DMRS in dem ersten PBCH-Symbol auch von einem Symbolindex innerhalb des SSB abhängig ist.

4. Verfahren gemäß Anspruch 3, wobei Bestimmen der Verschiebung durch Anwenden der Modulo-Funktion das Anwenden der Modulo-Funktion auf die Zellen-ID umfasst, um die Verschiebung als Reaktion auf Bestimmen, dass ein Betrag der Verschiebung größer als ein Abstand zwischen DMRS-Tönen des wiederholten PBCH-Symbols ist, zu bestimmen.

5. Verfahren gemäß Anspruch 2, wobei der Basissatz von Tönen eine Funktion der Zellen-ID ist.

6. Verfahren für drahtlose Kommunikationen durch ein Benutzergerät, umfassend:
Bestimmen (1002) von Zeit- und Frequenzressourcen zum Überwachen auf Demodulationsreferenzsignale, DMRS, basierend auf einer Ressourcenzuordnung und einer Zellenidentifikation, ID, wobei Bestimmen der Zeit- und Frequenzressourcen umfasst:
Bestimmen eines Basissatzes von Tönen;
Bestimmen einer auf den Basissatz von Tönen anzuwendenden Verschiebung durch Anwenden einer Modulo-Funktion auf die Zellen-ID; und
Anwenden der Verschiebung auf den Basissatz von Tönen, um mindestens die Frequenzressourcen zur Verwendung zum Übertragen des DMRS zu bestimmen; und
Überwachen (1004) für einen physikalischen Rundfunkkanal, PBCH, mit dem DMRS übertragen auf den bestimmten Zeit- und Frequenzressourcen, wobei das übertragene DMRS zwei oder drei Bits von Zeitinformation enthält, die einen Synchronisationssignal-, SS, Blockindex anzeigt, der dem PBCH zugeordnet ist.

7. Verfahren gemäß Anspruch 6, wobei die Zeit- und Frequenzressourcen basierend auf dem Basissatz von Tönen und der Verschiebung bestimmt werden, so dass ein erster Satz von Tönen für das DMRS in einem ersten PBCH-Symbol des PBCH verwendet wird und ein zweiter Satz von Tönen für das DMRS in einem zweiten PBCH-Symbol des PBCH verwendet wird.

8. Verfahren gemäß Anspruch 7, wobei:
das erste PBCH-Symbol in mehreren Symbolen innerhalb eines Synchronisationssignalblocks, SSB, wiederholt wird; und
die Verschiebung für das DMRS in dem ersten PBCH-Symbol auch von einem Symbolindex innerhalb des SSB abhängig ist.

9. Verfahren gemäß Anspruch 8, wobei Bestimmen der Verschiebung durch Anwenden der Modulo-Funktion das Anwenden der Modulo-Funktion auf die Zellen-ID umfasst, um die Verschiebung als Reaktion auf Bestimmen, dass ein Betrag der Verschiebung größer als ein Abstand zwischen DMRS-Tönen des wiederholten PBCH-Symbols ist, zu bestimmen.

10. Verfahren gemäß Anspruch 7, wobei der Basissatz von Tönen eine Funktion der Zellen-ID ist.

11. Vorrichtung für drahtlose Kommunikationen durch eine Netzwerkeinheit, umfassend mindestens einen Prozessor und einen Speicher, der mit dem mindestens einen Prozessor gekoppelt ist, wobei der mindestens eine Prozessor konfiguriert ist zum:
Bestimmen von Zeit- und Frequenzressourcen zur Verwendung zum Übertragen von Demodulationsreferenzsignalen, DMRS, basierend auf einer Ressourcenzuordnung und einer Zellenidentifikation, ID, wobei der mindestens eine Prozessor konfiguriert ist, um die Zeit- und Frequenzressourcen zu bestimmen durch:
Bestimmen eines Basissatzes von Tönen;
Bestimmen einer auf den Basissatz von Tönen anzuwendenden Verschiebung durch Anwenden einer Modulo-Funktion auf die Zellen-ID; und
Anwenden der Verschiebung auf den Basissatz von Tönen, um mindestens die Frequenzressourcen zur Verwendung zum Übertragen des DMRS zu bestimmen; und
Übertragen eines physikalischen Rundfunkkanals, PBCH, mit dem DMRS übertragen auf den bestimmten Zeit- und Frequenzressourcen, wobei das übertragene DMRS zwei oder drei Bits von Zeitinformation enthält, die einen Synchronisationssignal-, SS, Blockindex anzeigt, der dem PBCH zugeordnet ist.

12. Vorrichtung gemäß Anspruch 11, wobei die Zeit- und Frequenzressourcen basierend auf dem Basissatz von Tönen und der Verschiebung bestimmt werden, so dass ein erster Satz von Tönen für das DMRS in einem ersten PBCH-Symbol des PBCH verwendet wird und ein zweiter Satz von Tönen für das DMRS in einem zweiten PBCH-Symbol des PBCH verwendet wird.

13. Vorrichtung für drahtlose Kommunikationen durch ein Benutzergerät, umfassend mindestens einen Prozessor und einen Speicher, der mit dem mindestens einen Prozessor gekoppelt ist, wobei der mindestens eine Prozessor konfiguriert ist zum:
Bestimmen von Zeit- und Frequenzressourcen zum Überwachen auf Demodulationsreferenzsignale, DMRS, basierend auf einer Ressourcenzuordnung und einer Zellenidentifikation, ID, wobei Bestimmen der Zeit- und Frequenzressourcen umfasst:
Bestimmen eines Basissatzes von Tönen;
Bestimmen einer auf den Basissatz von Tönen anzuwendenden Verschiebung durch Anwenden einer Modulo-Funktion auf die Zellen-ID; und
Anwenden der Verschiebung auf den Basissatz von Tönen, um mindestens die Frequenzressourcen zur Verwendung zum Übertragen des DMRS zu bestimmen; und
Überwachen für einen physikalischen Rundfunkkanal, PBCH, mit dem DMRS übertragen auf den bestimmten Zeit- und Frequenzressourcen, wobei das übertragene DMRS zwei oder drei Bits von Zeitinformation enthält, die einen Synchronisationssignal-, SS, Blockindex anzeigt, der dem PBCH zugeordnet ist.

14. Vorrichtung gemäß Anspruch 13, wobei die Zeit- und Frequenzressourcen basierend auf dem Basissatz von Tönen und der Verschiebung bestimmt werden, so dass ein erster Satz von Tönen für das DMRS in einem ersten PBCH-Symbol des PBCH verwendet wird und ein zweiter Satz von Tönen für DMRS in einem zweiten PBCH-Symbol des PBCH verwendet wird.

15. Computerprogramm, umfassend Anweisungen, die bei Ausführung durch einen Computer den Computer veranlassen, das Verfahren gemäß einem der Ansprüche 1-10 auszuführen.

## Revendications

1. Un procédé de communications sans fil par une entité de réseau, comprenant :
la détermination (902) de ressources temporelles et fréquentielles à utiliser pour transmettre des signaux de référence de démodulation, DMRS, sur la base d'un mappage de ressources et d'une identification, ID, de cellule, dans lequel la détermination des ressources temporelles et fréquentielles comprend :
la détermination d'un ensemble de base de tonalités ;
la détermination d'un décalage à appliquer à l'ensemble de base de tonalités en appliquant une fonction modulo à l'ID de cellule ; et
l'application du décalage à l'ensemble de base de tonalités pour déterminer au moins les ressources fréquentielles à utiliser pour transmettre le DMRS ; et
la transmission (904) d'un canal broadcast physique, PBCH, avec le DMRS transmis sur les ressources temporelles et fréquentielles déterminées, dans lequel le DMRS transmis inclut deux ou trois bits d'information de séquencement indiquant un indice de bloc de signal de synchronisation, SS, associé au PBCH.

2. Le procédé selon la revendication 1, dans lequel les ressources temporelles et fréquentielles sont déterminées sur la base de l'ensemble de base de tonalités et du décalage de telle sorte qu'un premier ensemble de tonalités soit utilisé pour le DMRS dans un premier symbole PBCH du PBCH et qu'un second ensemble de tonalités soit utilisé pour le DMRS dans un second symbole PBCH du PBCH.

3. Le procédé selon la revendication 2, dans lequel :
le premier symbole PBCH est répété dans de multiples symboles à l'intérieur d'un bloc de signal de synchronisation, SSB ; et
le décalage pour le DMRS dans le premier symbole PBCH dépend également d'un indice de symbole à l'intérieur du SSB.

4. Le procédé selon la revendication 3, dans lequel la détermination du décalage en appliquant la fonction modulo comprend l'application de la fonction modulo à l'ID de cellule pour déterminer le décalage en réponse à la détermination qu'une quantité de décalage est supérieure à un espacement entre des tonalités DMRS du symbole PBCH répété.

5. Le procédé selon la revendication 2, dans lequel l'ensemble de base de tonalités est fonction de l'ID de cellule.

6. Un procédé de communications sans fil par un équipement utilisateur, comprenant :
la détermination (1002) de ressources temporelles et fréquentielles à surveiller pour des signaux de référence de démodulation, DMRS, sur la base d'un mappage de ressources et d'une identification, ID, de cellule, dans lequel la détermination des ressources temporelles et fréquentielles comprend :
la détermination d'un ensemble de base de tonalités ;
la détermination d'un décalage à appliquer à l'ensemble de base de tonalités en appliquant une fonction modulo à l'ID de cellule ; et
l'application du décalage à l'ensemble de base de tonalités pour déterminer au moins les ressources fréquentielles à utiliser pour transmettre le DMRS ; et
la surveillance (1004) en l'attente d'un canal broadcast physique, PBCH, avec le DMRS transmis sur les ressources temporelles et fréquentielles déterminées, dans lequel le DMRS transmis inclut deux ou trois bits d'information de séquencement indiquant un indice de bloc de signal de synchronisation, SS, associé au PBCH.

7. Le procédé selon la revendication 6, dans lequel les ressources temporelles et fréquentielles sont déterminées sur la base de l'ensemble de base de tonalités et du décalage de telle sorte qu'un premier ensemble de tonalités soit utilisé pour le DMRS dans un premier symbole PBCH du PBCH et qu'un second ensemble de tonalités soit utilisé pour le DMRS dans un second symbole PBCH du PBCH.

8. Le procédé selon la revendication 7, dans lequel :
le premier symbole PBCH est répété dans de multiples symboles à l'intérieur d'un bloc de signal de synchronisation, SSB ; et
le décalage pour le DMRS dans le premier symbole PBCH dépend également d'un indice de symbole à l'intérieur du SSB.

9. Le procédé selon la revendication 8, dans lequel la détermination du décalage en appliquant la fonction modulo comprend l'application de la fonction modulo à l'ID de cellule pour déterminer le décalage en réponse à la détermination qu'une quantité de décalage est supérieure à un espacement entre des tonalités DMRS du symbole PBCH répété.

10. Le procédé selon la revendication 7, dans lequel l'ensemble de base de tonalités est fonction de l'ID de cellule.

11. Un appareil de communications sans fil par une entité de réseau, comprenant au moins un processeur et une mémoire couplée à l'au moins un processeur, dans lequel l'au moins un processeur est configuré pour :
déterminer des ressources temporelles et fréquentielles à utiliser pour transmettre des signaux de référence de démodulation, DMRS, sur la base d'un mappage de ressources et d'une identification, ID, de cellule, dans lequel l'au moins un processeur est configuré pour déterminer les ressources temporelles et fréquentielles par :
détermination d'un ensemble de base de tonalités ;
détermination d'un décalage à appliquer à l'ensemble de base de tonalités en appliquant une fonction modulo à l'ID de cellule ; et
application du décalage à l'ensemble de base de tonalités pour déterminer au moins les ressources fréquentielles à utiliser pour transmettre le DMRS ; et
transmettre un canal broadcast physique, PBCH, avec le DMRS transmis sur les ressources temporelles et fréquentielles déterminées, dans lequel le DMRS transmis inclut deux ou trois bits d'information de séquencement indiquant un indice de bloc de signal de synchronisation, SS, associé au PBCH.

12. L'appareil selon la revendication 11, dans lequel les ressources temporelles et fréquentielles sont déterminées sur la base de l'ensemble de base de tonalités et du décalage de telle sorte qu'un premier ensemble de tonalités soit utilisé pour le DMRS dans un premier symbole PBCH du PBCH et qu'un second ensemble de tonalités soit utilisé pour le DMRS dans un second symbole PBCH du PBCH.

13. Un appareil pour des communications sans fil par un équipement utilisateur, comprenant au moins un processeur et une mémoire couplée à l'au moins un processeur, dans lequel l'au moins un processeur est configuré pour :
déterminer des ressources temporelles et fréquentielles à surveiller pour des signaux de référence de démodulation, DMRS, sur la base d'un mappage de ressources et d'une identification, ID, de cellule, dans lequel la détermination des ressources temporelles et
fréquentielles comprend :
la détermination d'un ensemble de base de tonalités ;
la détermination d'un décalage à appliquer à l'ensemble de base de tonalités en appliquant une fonction modulo à l'ID de cellule ; et
l'application du décalage à l'ensemble de base de tonalités pour déterminer au moins les ressources fréquentielles à utiliser pour transmettre le DMRS ; et
la surveillance en l'attente d'un canal broadcast physique, PBCH, avec le DMRS transmis sur les ressources temporelles et fréquentielles déterminées, dans lequel le DMRS transmis inclut deux ou trois bits d'information de séquencement indiquant un indice de bloc de signal de synchronisation, SS, associé au PBCH.

14. L'appareil selon la revendication 13, dans lequel les ressources temporelles et fréquentielles sont déterminées sur la base de l'ensemble de base de tonalités et du décalage de telle sorte qu'un premier ensemble de tonalités soit utilisé pour le DMRS dans un premier symbole PBCH du PBCH et qu'un second ensemble de tonalités soit utilisé pour le DMRS dans un second symbole PBCH du PBCH.

15. Un programme de calculateur comprenant des instructions qui, lorsqu'elles sont exécutées par un calculateur, amènent le calculateur à réaliser le procédé selon l'une quelconque des revendications 1 à 10.
